# EUROPÄISCHE PATENTSCHRIFT

(11) **EP 1 385 137 B1**
(45) Veröffentlichungstag und Bekanntmachung des Hinweises auf die Patenterteilung: **17.10.2007**
(21) Anmeldenummer: 03016919.7
(22) Anmeldetag: 24.07.2003
(51) Int. Cl.: G09G 3/20, B60P 3/32, G01D 7/00, H02J 7/00, B60R 16/02, B60R 25/04

(54) **Anzeigevorrichtung zur Verwendung in Wohnmobilen und Wohnwagen**
Display device for use in campers and caravans
Dispositif d'affichage pour utilisation dans des camping-cars et des caravanes

(30) Priorität: 26.07.2002 DE 20211317 U
(43) Veröffentlichungstag der Anmeldung: 28.01.2004
(73) Patentinhaber: Reich KG, Regel- und Sicherheitstechnik, 35713 Eschenburg-Wissenbach (DE)
(72) Erfinder: Bender, Steffen, 35745 Herborn (DE)
(74) Vertreter: Hofstetter, Alfons J.

(56) Entgegenhaltungen:
- US-A- 5 794 164
- US-A- 5 939 855

## Beschreibung

Die vorliegende Erfindung betrifft ein Anzeigesystem für Wohnmobile und Wohnwagen mit einer Anzeigevorrichtung mit einer Anzeigefläche und mindestens einem Bedienungselement zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt.

Derartige Anzeigesysteme sind aus dem Stand der Technik bekannt und dienen zur Anzeige von Betriebszuständen in Wohnmobilen und Wohnwagen, zum Beispiel zur Überprüfung des Ladezustandes von Batterien, der Überwachung der Prüfstände diverser Flüssigkeitstanks, zur Anzeige der Innen- und Außentemperatur oder auch zur Anzeige weiterer Werte und Daten, die über übliche Sensoren ermittelt werden.

Die bekannten Anzeigesysteme weisen jedoch den Nachteil auf, dass sie fest innerhalb des Wohnmobils oder Wohnwagens angeordnet sind, wobei üblicherweise eine Vielzahl von Anzeigevorrichtungen für die Darstellung unterschiedlichster Werte und Funktionen an unterschiedlichen Orten innerhalb des Wohnmobils oder Wohnwagens angeordnet sind. Es ist daher für den Fahrer eines Wohnmobils zum Beispiel unmöglich, während der Fahrt bestimmte Betriebszustände seines Wohnmobils abzurufen. Insbesondere ist ihm der jederzeitige Abruf aller relevanten Betriebszustände innerhalb des Wohnmobils oder des Wohnwagens verwehrt.

Aus der US 5,939,855 ist ein Anzeigesystem für ein Freizeitmobil mit einem Bedienungselement bekannt, wobei mittels des Bedienungselements die Anzeige und die Eingabe eines Datenwerts, welcher verschiedenste Betriebszustände von Batterien oder sonstigen elektrischen Verbrauchern im Fahrzeug wiedergibt, ausgewählt werden. Eine Anzeigevorrichtung ist drahtgebunden mit einer Regelungsschaltung über einen Überwachungsschaltkreis elektrisch verbunden. Zwischen der Anzeigevorrichtung und den Schaltungsanordnungen wird eine Datenübertragung durchgeführt. Des Weiteren ist die Regelungsschaltung mit einer Wechselstromeinheit und Batterien in datenübertragender Weise verbunden.

Aus der US 5,794,164 ist ein Anzeigesystem für ein Fahrzeug bekannt. Über eine Infrarotschnittstelle eines Computers können Daten mit einer Anzeigevorrichtung ausgetauscht werden. Die Anzeigevorrichtung ist mit Sicherheits- und Diagnosevorrichtungen, Lautsprechern und der Fahrzeugbatterie elektrisch verbunden.

Es ist daher Aufgabe der vorliegenden Erfindung, ein Anzeigesystem der eingangs genannten Art bereitzustellen, welche einen einfachen und jederzeitigen Zugriff auf alle relevanten Daten von Betriebszuständen von Elementen oder Umgebungsparametern inner- oder außerhalb des Wohnmobils oder Wohnwagens gewährleistet und eine hohe Sicherheits- und Schutzfunktion vor unbefugter Nutzung von Komponenten des Fahrzeugs ermöglicht.

Zur Lösung dieser Aufgabe dienen die Merkmale des unabhängigen Anspruches.

Vorteilhafte Ausgestaltungen sind in den Unteransprüchen beschrieben.

Ein erfindungsgemäßes Anzeigesystem umfaßt die Merkmale des Oberbegriffs des Anspruchs 1. Eine Anzeigevorrichtung des Systems ist in datenübertragender Weise mit einem Anschlusskontakt mindestens einer Anschlussvorrichtung lösbar verbunden, wobei die Anschlussvorrichtung in datenübertragender Weise mit mindestens einer Vorrichtung zum Anschluss von Stromquellen und elektrischen Verbrauchern in dem Wohnmobil oder Wohnwagen verbunden ist. Durch die lösbare Verbindung der Anzeigevorrichtung mit mindestens einem Anschlusskontakt einer Anschlussvorrichtung ist gewährleistet, dass inner- oder außerhalb des Wohnmobils oder Wohnwagens jeweils an geeigneter Stelle eine entsprechende Anschlussvorrichtung angeordnet werden kann, über die dann die Anzeigevorrichtung betätigt wird. Insbesondere ist es möglich, im Bereich der Fahrerkonsole eine Anschlussvorrichtung für die Anzeigevorrichtung anzubringen. Da die Anschlussvorrichtung bzw. die Anschlussvorrichtungen mit einer oder mehreren zentralen Vorrichtungen zum Anschluss der Stromquellen und der elektrischen Verbraucher des Wohnmobils oder Wohnwagens verbunden ist, kann auf die bisher üblichen Anzeigevorrichtungen, die jeweils nur eine begrenzte Anzahl von Betriebszuständen oder Parametern angezeigt haben und die darüber hinaus innerhalb des Wohnmobils oder Wohnwagens an unterschiedlichen Stellen angebracht wurden, verzichtet werden. Es ist aus Bequemlichkeitsgründen aber auch möglich, mehrere Anschlussvorrichtungen in oder am Wohnmobil oder Wohnwagen anzubringen, die jeweils mit der Anzeigevorrichtung den Zugriff auf alle relevanten Daten des Wohnmobils oder Wohnwagens erlauben. Die Anschlussvorrichtungen müssen dabei jeweils nur mit der oder den Vorrichtungen zum Anschluss von Stromquellen und elektrischen Verbrauchern in Daten übertragender Weise verbunden werden. Bei einer Trennung von Anzeigevorrichtung und Anschlussvorrichtung ist die Vorrichtung zum Anschluss von Stromquellen und elektrischen Verbrauchern in dem Wohnmobil oder Wohnwagen nicht aktivierbar.

In einer vorteilhaften Ausgestaltung der Erfindung ist die Verbindung der Anzeigevorrichtung mit der Anschlussvorrichtung als Steckverbindung ausgebildet.

Dadurch ist gewährleistet, dass die Verbindung jederzeit lösbar ist und zugleich während der Verbindung der genannten Elemente ein sicherer Kontakt zwischen diesen besteht.

In einer weiteren vorteilhaften Ausgestaltung der Erfindung weisen die Anzeigevorrichtung und/oder die Anschlussvorrichtung und/oder die Vorrichtung zum Anschluss von Stromquellen und elektrischen Verbrauchern jeweils eine Sende- und/oder Empfangseinheit zur Übertragung und/oder zum Empfang von Daten auf. Dadurch ist es vorteilhafterweise möglich, auch ohne den direkten Kontakt zwischen der Anschlussvorrichtung, der Anzeigevorrichtung und/oder der Vorrichtung zum Anschluss von Stromquellen und elektrischen Verbrauchern, Daten auszutauschen. Dies bedeutet, dass die Betriebszustände oder andere Parameter auch außerhalb des Wohnmobils oder Wohnwagens jederzeit abrufbar und eingebbar beziehungsweise bestimmbar sind. Hierzu ist die Anzeigevorrichtung vorteilhafterweise tragbar ausgebildet. Die Anzeigevorrichtung kann dabei auch aus einem Laptop-Computer, einem PDA-Computer, einem Palm-Computer, einem Handheld-Computer, einem Organizer oder einem tragbaren Telefon bestehen. Zudem kann gegebenenfalls auf eine aufwendige Verkabelung der Anschlussvorrichtungen im Wohnmobil oder Wohnwagen verzichtet werden. Hierbei ist es auch möglich, dass die Anschlussvorrichtung in der Anzeigevorrichtung integriert ausgebildet ist.

In einer weiteren vorteilhaften Ausgestaltung der Erfindung weist die Anzeigevorrichtung mindestens eine Speichereinheit zum Speichern von Daten auf. Damit ist einerseits ein Datenvergleich über längere Zeiträume möglich, andererseits können auch Daten nach einer längeren Dekonnektierung zwischen Anzeigevorrichtung und Anschlussvorrichtung aufgerufen werden. Zudem ist die Anzeigevorrichtung üblicherweise programmierbar ausgebildet, so dass auch eine Auswertung und graphische Darstellung der Daten möglich ist. Die Anzeigefläche der Anzeigevorrichtung ist dabei vorteilhafterweise ein LCD-Bildschirm.

In einer weiteren vorteilhaften Ausgestaltung der Erfindung ist die Anzeigevorrichtung drehbar befestigbar. Dadurch ist es möglich, die Anzeigevorrichtung und damit die Anzeigefläche in jeder beliebigen Stellung, vorzugsweise horizontal oder vertikal, anzuordnen. Dabei ist die Richtung bzw. Orientierung der auf der Anzeigefläche dargestellten Werte, Daten, Graphiken etc. ebenfalls frei wählbar.

In einer weiteren vorteilhaften Ausgestaltung der Erfindung ist das Bedienungselement der Anzeigevorrichtung als multifunktioneller Dreh-/Drückschalter ausgebildet. Durch ein derart ausgestaltetes Bedienungselement ist eine leichte Bedienung der Anzeigevorrichtung möglich. Zudem können mit einem derartigen Bedienungselement alle Funktionen der Anzeigevorrichtung durchgeführt werden.

Es ist auch möglich, dass die Anzeigevorrichtung über die Vorrichtung zum Anschluss von Stromquellen und elektrischen Verbrauchern mit einer Wegfahrsperre des Wohnmobils verbunden ist. Durch derartige Ausgestaltungen ist ein wirksamer Diebstahlschutz verwirklicht.

In einer weiteren vorteilhaften Ausgestaltung der Erfindung erzeugt die Anzeigevorrichtung bei einem Über- oder Unterschreiten vorbestimmter Datenwerte, die einen kritischen Betriebszustand von Elementen oder Umgebungsparametern inner- oder außerhalb des Wohnmobils oder Wohnwagens darstellen, ein akustisches oder optisches Warnsignal.

Weitere Einzelheiten, Merkmale und Vorteile der Erfindung ergeben sich aus der folgenden Beschreibung eines zeichnerisch dargestellten Ausführungsbeispiels.
Es zeigen
- Figur 1: eine schematische Darstellung eines erfindungsgemäßen Anzeigesystems, und
- Figur 2: eine weitere schematische Darstellung des erfindungsgemäßen Anzeigesystems.

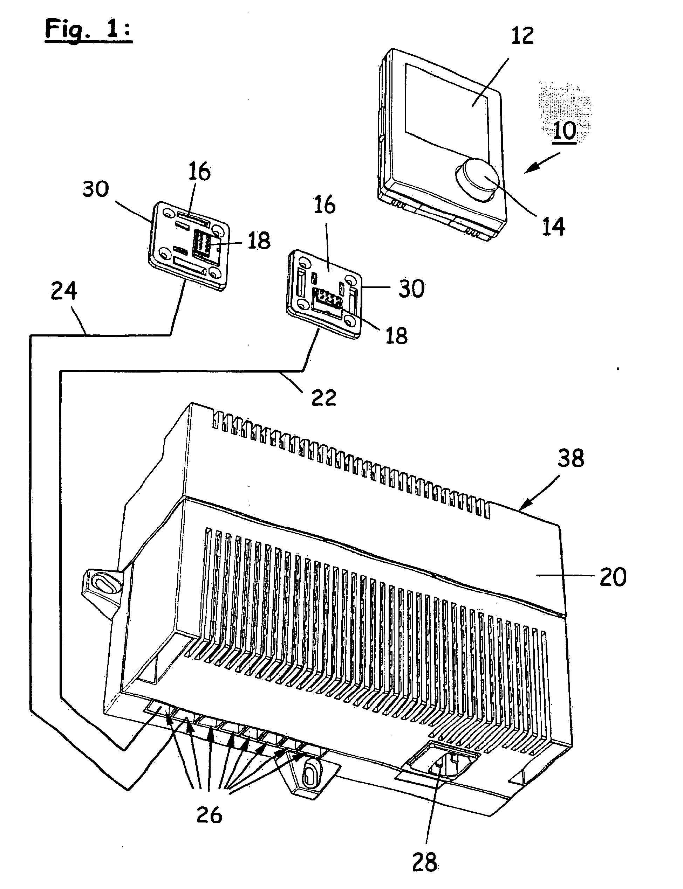

Figur 1 zeigt eine Anzeigevorrichtung 10 zur Verwendung in Wohnmobilen und Wohnwagen. Die Anzeigevorrichtung 10 weist eine Anzeigefläche 12 bestehend aus einem LCD-Bildschirm sowie ein Bedienungselement 14 zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt. Das Bedienungselement 14 ist dabei als multifunktioneller Dreh-/Drückschalter ausgebildet.

Des weiteren erkennt man, dass die Anzeigevorrichtung 10 lösbar mit einem jeweiligen Anschlusskontakt 18 der beiden dargestellten Anschlussvorrichtungen 16 in datenübertragender Weise verbunden ist. Zudem ist es möglich, die Anzeigevorrichtung drehbar zu befestigen. Die Anschlussvorrichtungen 16 sind dabei als Anschlussplatte 30 ausgebildet. Die Anschlussplatte 30 ist in das Gehäuse der Anzeigevorrichtung 10, insbesondere auf der der Anzeigefläche 12 gegenüberliegenden Seite des Gehäuses einsteckbar. Man erkennt, dass die Anschlussvorrichtungen 16 jeweils in datenübertragender Weise über Anschlussleitungen 23, 24 mit einer Vorrichtung 20 zum Anschluss von Stromquellen und elektrischen Verbrauchern in dem Wohnmobil oder Wohnwagen verbunden sind. Hierzu weist die Vorrichtung 20 Anschlüsse 26 auf, die als Ein- und Ausgänge für verschiedene Anschlussleitungen, wie zum Beispiel den Anschlussleitungen 22, 24 dienen. Es ist aber auch möglich, dass die Anschlüsse 26 zum Anschluss verschiedener Sensoren, wie zum Beispiel für Sensoren zum Messen von Tankinhalten, Gassensoren, Temperatursensoren, Drucksensoren oder Ähnliches verwendet werden.

Zur Stromversorgung weist die Vorrichtung 20 einen Anschluss 28 auf. Man erkennt, dass das Gehäuse 20 des weiteren eine Vielzahl von Lüftungsschlitzen aufweist, die zur Vermeidung der Überhitzung der Vorrichtung 20 dienen.

Die Anschlussvorrichtungen 16 können jeder beliebigen Stelle innerhalb oder außerhalb des Wohnmobils oder Wohnwagens angeordnet werden. Insbesondere wird eine Anschlussvorrichtung 16 im Bereich der Fahrerkonsole des Wohnmobils angeordnet, so dass der Fahrer des Wohnmobils jederzeit in der Lage ist, Daten über die Betriebszustände oder andere Parameter in und außerhalb des Wohnmobils abzurufen. Die Verbindung der Anzeigevorrichtung 10 mit den jeweiligen Anschlussvorrichtungen 16 ist als Steckverbindung ausgebildet. Des weiteren ist es möglich, dass die Anzeigevorrichtung 10, die Anschlussvorrichtung 16 und/oder die Vorrichtung 20 jeweils eine Sende- und/oder Empfangseinheit zur Übertragung und/oder zum Empfang von Daten aufweisen.

Die dargestellte Anzeigevorrichtung ist tragbar ausgebildet. Es ist zudem möglich, dass die Anzeigevorrichtung 10 ein Laptop-Computer, ein PDA-Computer, ein Palm-Computer, ein Handheld-Computer, ein Organzier oder ein tragbares Telefon ist. Schließlich weist die dargestellte Anzeigevorrichtung 10 eine Speichereinheit (nicht dargestellt) zum Speichern von Daten auf. Zudem ist sie programmierbar ausgebildet. Dadurch ist es möglich, einerseits Daten zu Speichern und andererseits diese auszuwerten und auch graphisch auf der Anzeigefläche 12 darzustellen.

Die Anzeigevorrichtung 10 ist zudem derart ausgebildet, dass bei einer Trennung von Anzeigevorrichtung 10 und Anschlussvorrichtung 16 die Vorrichtung 20 nicht aktivierbar ist. Die Anzeigevorrichtung 10 kann aber auch über die Vorrichtung 20 mit einer Wegfahrsperre (nicht dargestellt) des Wohnmobils verbunden sein. Zudem kann die Anzeigevorrichtung 10 derart ausgebildet sein, dass bei einem Über- oder Unterschreiten vorbestimmter Datenwerte, die einen kritischen Betriebszustand von Elementen oder Umgebungsparametern inner- oder außerhalb des Wohnmobils oder Wohnwagens darstellen, ein akustisches oder optisches Warnsignal erzeugt wird.

Die Anschlussvorrichtung 16 kann auch in der Anzeigevorrichtung 10 integriert ausgebildet sein (nicht dargestellt).

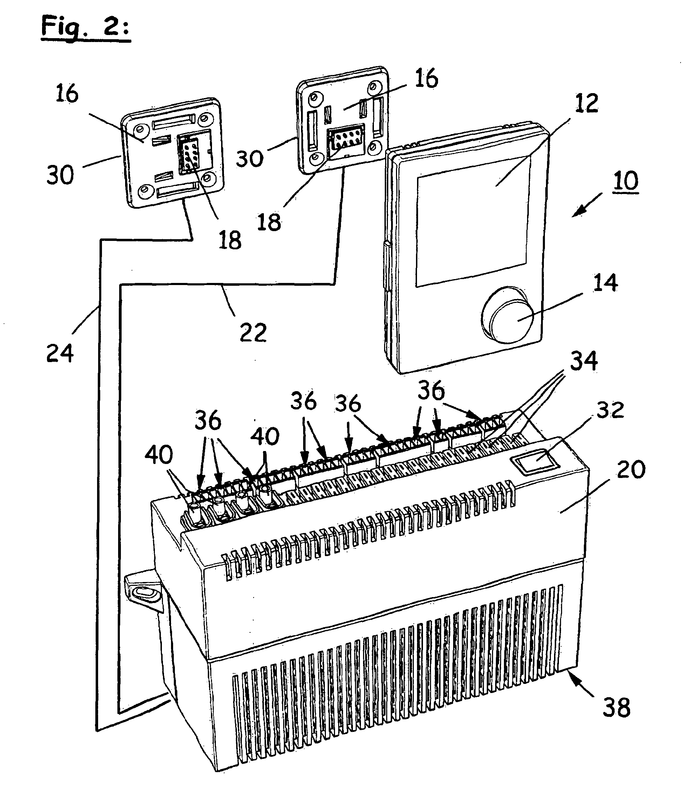

Figur 2 zeigt eine weitere schematische Darstellung der Anzeigevorrichtung 10. Man erkennt, dass die Vorrichtung 20 weitere Anschlussstellen 36 aufweist. Die Anschlussstellen 36 können dabei als Anschlüsse bzw. Ein- und Ausgänge für alle stromverbrauchenden Elemente eines Wohnmobils oder Wohnwagens dienen. Insbesondere dienen sie als Anschlüsse für sogenannte 12 V-Verbraucher, wie zum Beispiel Lichtanlagen, Kühlschränke, Fernseher, Radios und Ähnliches. Zudem weist die Vorrichtung 20 Anschlüsse 40 zum Anschluss von mindestens zwei Batterien auf. Zur Sicherung der einzelnen Stromkreise ist zudem eine Sicherungssteckleiste 34 zum Einfügen entsprechender Sicherungen ausgebildet. Zum Ein- bzw. Ausschalten der Vorrichtung 20 dient ein Schalter 32.

## Patentansprüche

1. Anzeigesystem für Wohnmobile und Wohnwagen, welches Anzeigesystem enthält
- eine Anzeigevorrichtung (10) mit einer Anzeigefläche (12) und mit einem Bedienungselement (14) zur Auswahl der Anzeige und/oder zur Eingabe eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt,
- mindestens eine Vorrichtung (20) zum Anschluss von Stromquellen und elektrischen Verbrauchern in dem Wohnmobil oder Wohnwagen, und
- mindestens einer Anschlussvorrichtung (16), die in datenübertragender Weise mit mindestens einer Vorrichtung (20) zum Anschluss von Stromquellen und elektrischen Verbrauchern in dem Wohnmobil oder Wohnwagen verbunden ist,
**dadurch gekennzeichnet,**
- **dass** die Anzeigevorrichtung (10) mit einem Anschlusskontakt (18) der Anschlussvorrichtung (16) in datenübertragender Weise lösbar verbunden ist, so dass inner- oder außerhalb des Wohnmobils oder Wohnwagens jeweils an geeigneter Stelle eine entsprechende Anschlussvorrichtung (16) angeordnet werden kann, über die dann die Anzeigevorrichtung (10) betätigt werden kann, und
- **dass** bei einer Trennung von Anzeigevorrichtung (10) und Anschlussvorrichtung (16) die Vorrichtung (20) zum Anschluss von Stromquellen und elektrischen Verbrauchern nicht aktivierbar ist.

2. Anzeigesystem nach Anspruch 1,
**dadurch gekennzeichnet,**
**dass** mindestens zwei Anschlussvorrichtungen (16) in oder am Wohnmobil oder Wohnwagen ausgebildet sind.

3. Anzeigesystem nach Anspruch 1 oder 2,
**dadurch gekennzeichnet,**
**dass** die Verbindung der Anzeigevorrichtung (10) mit der Anschlussvorrichtung (16) als Steckverbindung ausgebildet ist.

4. Anzeigesystem nach Anspruch 1,
**dadurch gekennzeichnet,**
**dass** die Anschlussvorrichtung (16) in der Anzeigevorrichtung (10) integriert ausgebildet ist.

5. Anzeigesystem nach einem der vorhergehenden Ansprüche,
**dadurch gekennzeichnet,**
**dass** die Anzeigevorrichtung (10) und/oder die Anschlussvorrichtung (16) und/oder die Vorrichtung (20) jeweils eine Sende- und/oder Empfangseinheit zur Übertragung und/oder zum Empfang von Daten aufweisen.

6. Anzeigesystem nach einem der vorhergehenden Ansprüche,
**dadurch gekennzeichnet,**
**dass** die Anzeigevorrichtung (10) tragbar ausgebildet ist.

7. Anzeigesystem nach einem der vorhergehenden Ansprüche,
**dadurch gekennzeichnet,**
**dass** die Anzeigevorrichtung (10) mindestens eine Speichereinheit zum Speichern von Daten aufweist.

8. Anzeigesystem nach einem der vorhergehenden Ansprüche,
**dadurch gekennzeichnet,**
**dass** die Anzeigefläche (12) ein LCD-Bildschirm ist.

9. Anzeigesystem nach einem der vorhergehenden Ansprüche,
**dadurch gekennzeichnet,**
**dass** die Anzeigevorrichtung (10) ein Laptop-Computer, ein PDA-Computer, ein Palm-Computer, ein Handheld-Computer, ein Organizer oder ein tragbares Telefon ist.

10. Anzeigesystem nach einem der vorhergehenden Ansprüche,
**dadurch gekennzeichnet,**
**dass** die Anzeigevorrichtung (10) drehbar befestigbar ist.

11. Anzeigesystem nach einem der vorhergehenden Ansprüche,
**dadurch gekennzeichnet,**
**dass** das Bedienungselement (14) als multifunktioneller Dreh/Drückschalter ausgebildet ist.

12. Anzeigesystem nach einem der vorhergehenden Ansprüche,
**dadurch gekennzeichnet,**
**dass** die Anzeigevorrichtung (10) programmierbar ausgebildet ist.

13. Anzeigesystem nach einem der vorhergehenden Ansprüche,
**dadurch gekennzeichnet,**
**dass** die Anzeigevorrichtung (10) über die Vorrichtung (20) mit einer Wegfahrsperre des Wohnmobils verbunden ist.

14. Anzeigesystem nach einem der vorhergehenden Ansprüche,
**dadurch gekennzeichnet,**
**dass** die Anzeigevorrichtung (10) bei einem Über- oder Unterschreiten vorbestimmter Datenwerte, die einen kritischen Betriebszustand von Elementen oder Umgebungsparametern inner- oder außerhalb des Wohnmobils oder Wohnwagens darstellen, ein akustisches oder optisches Warnsignal erzeugt.

## Claims

1. Display system for campers and caravans, which display system includes
- a display device (10) having a display area (12) and an operational element (14) for selecting the display and/or for inputting a data value, the data value representing at least one temporally preceding, actual or desired operational state of elements or environmental parameters inside or outside the camper or caravan,
- at least one device (20) for connecting current sources and electrical consumers in the camper or caravan, and
- at least one connecting device (16) communicatively connected to at least one device (20) for connecting current sources and electrical consumers in the camper or caravan,
**characterized in that**
- the display device (10) is communicatively connected to a connection contact (18) of the connecting device (16) in detachable manner such that inside or outside the camper or caravan a corresponding connecting device (16) can each be disposed at an appropriate location, through which then the display device (10) can be actuated, and
- upon disconnection of the display device (10) and connecting device (16), the device (20) is not able to be activated for connecting current sources and electrical consumers.

2. Display system according to claim 1,
**characterized in that**
at least two connecting devices (16) are formed in or on the camper or caravan.

3. Display system according to claim 1 or 2,
**characterized in that**
the connection of the display device (10) to the connecting device (16) is formed as a plug connection.

4. Display system according to claim 1,
**characterized in that**
the connecting device (16) is formed integrated in the display device (10).

5. Display system according to anyone of the preceding claims,
**characterized in that**
the display device (10) and/or the connecting device (16) and/or the device (20) each have a transmitting and/or receiving unit for transmitting and/or for receiving data.

6. Display system according to anyone of the preceding claims,
**characterized in that**
the display device (10) is portably formed.

7. Display system according to anyone of the preceding claims,
**characterized in that**
the display device (10) has at least one storage unit for storing data.

8. Display system according to anyone of the preceding claims,
**characterized in that**
the display area (12) is an LCD screen.

9. Display system according to anyone of the preceding claims,
**characterized in that**
the display device (10) is a laptop computer, a PDA computer, a palm computer, a handheld computer, an organizer or a portable telephone.

10. Display system according to anyone of the preceding claims,
**characterized in that**
the display device (10) is pivotally attachable.

11. Display system according to anyone of the preceding claims,
**characterized in that**
the operational element (14) is formed as a multifunctional rotary/pressure switch.

12. Display system according to anyone of the preceding claims,
**characterized in that**
the display device (10) is formed programmable.

13. Display system according to anyone of the preceding claims,
**characterized in that**
the display device (10) is connected to an immobilizer of the camper through the device (20).

14. Display system according to anyone of the preceding claims,
**characterized in that**
the display device (10) generates an acoustical or optical warning signal upon exceeding or falling below predetermined data values representing a critical operational state of elements or environmental parameters inside or outside the camper or caravan.

## Revendications

1. Dispositif d'affichage pour camping-cars et caravanes, ledit dispositif d'affichage comprenant
- un dispositif d'affichage (10) comportant une surface d'affichage (12) et un élément d'exploitation (14) pour la sélection de l'affichage et/ou l'entrée d'une valeur de donnée, la valeur de donnée représentant un état de fonctionnement temporaire, actuel ou souhaité d'éléments ou de paramètres d'environnement internes ou externes au camping-car ou à la caravane,
- au moins un dispositif (20) de raccordement de sources de courant et de consommateurs électriques dans le camping-car ou la caravane et
- au moins un dispositif de raccordement (16) qui, de façon à transmettre des données, est relié à au moins un dispositif (20) de raccordement de sources de courant et de consommateurs électriques dans le camping-car ou la caravane,
**caractérisé en ce que**
- le dispositif d'affichage (10) est relié de façon amovible à un contact de raccordement (18) du dispositif de raccordement (16) pour transmettre des données, de manière à ce que, à l'intérieur ou à l'extérieur du camping-car ou de la caravane, chaque fois en un emplacement approprié, un dispositif de raccordement (16) correspondant puisse être disposé par lequel le dispositif d'affichage (10) peut être actionné et
- que lors de la séparation du dispositif d'affichage (10) et du dispositif de raccordement (16), le dispositif (20) de raccordement de sources de courant et de consommateurs électriques ne puisse pas être activé.

2. Dispositif d'affichage selon la revendication 1,
**caractérisé en ce que**
au moins deux dispositifs de raccordement (16) sont constitués dans ou au camping-car ou à la caravane.

3. Dispositif d'affichage selon la revendication 1 ou 2,
**caractérisé en ce que**
la liaison entre le dispositif d'affichage (10) et le dispositif de raccordement (16) est réalisée sous forme de liaison à enficher.

4. Dispositif d'affichage selon la revendication 1,
**caractérisé en ce que**
le dispositif de raccordement (16) est réalisé de façon intégrée dans le dispositif d'affichage (10).

5. Dispositif d'affichage selon l'une quelconque des revendications précédentes,
**caractérisé en ce que**
le dispositif d'affichage (10) et/ou le dispositif de raccordement (16) et/ou le dispositif (20) présentent chaque fois une unité d'émission et/ou de réception pour la transmission et/ou la réception de données.

6. Dispositif d'affichage selon l'une quelconque des revendications précédentes,
**caractérisé en ce que**
le dispositif d'affichage (10) est réalisé de façon à être portable.

7. Dispositif d'affichage selon l'une quelconque des revendications précédentes,
**caractérisé en ce que**
le dispositif d'affichage (10) présente au moins une unité de stockage pour stocker des données.

8. Dispositif d'affichage selon l'une quelconque des revendications précédentes,
**caractérisé en ce que**
la surface d'affichage (12) est un écran LCD.

9. Dispositif d'affichage selon l'une quelconque des revendications précédentes,
**caractérisé en ce que**
le dispositif d'affichage (10) est un ordinateur portable, un ordinateur de type assistant personnel, un ordinateur de type Palm, un ordinateur de poche, un organiseur ou un téléphone mobile.

10. Dispositif d'affichage selon l'une quelconque des revendications précédentes,
**caractérisé en ce que**
le dispositif d'affichage (10) peut être fixé de façon à pouvoir pivoter.

11. Dispositif d'affichage selon l'une quelconque des revendications précédentes,
**caractérisé en ce que**
l'élément d'exploitation (14) est réalisé sous la forme d'un commutateur rotatif/à pression.

12. Dispositif d'affichage selon l'une quelconque des revendications précédentes,
**caractérisé en ce que**
le dispositif d'affichage (10) est réalisé de façon à être programmable.

13. Dispositif d'affichage selon l'une quelconque des revendications précédentes,
**caractérisé en ce que**
le dispositif d'affichage (10) est relié par le dispositif (20) à un dispositif d'immobilisation du camping-car.

14. Dispositif d'affichage selon l'une quelconque des revendications précédentes,
**caractérisé en ce que**
le dispositif d'affichage (10) génère un signal d'avertissement acoustique ou optique lors du franchissement vers le haut ou vers le bas de valeurs de données prédéterminées qui représentent un état de fonctionnement critique d'éléments ou de paramètres d'environnement internes ou externes au camping-car ou à la caravane.
